# EUROPÄISCHE PATENTSCHRIFT

(11) **EP 4 071 405 B1**
(45) Veröffentlichungstag und Bekanntmachung des Hinweises auf die Patenterteilung: **22.01.2025**
(21) Anmeldenummer: 22164887.6
(22) Anmeldetag: 29.03.2022
(51) Int. Cl.: F21V 21/005, F21V 21/02, F21V 31/00, F16J 15/02, F16J 15/06, H02G 3/06

(54) **DICHTMANSCHETTE MIT DICHTSTEG UND DAMIT AUSGESTATTETES LICHTBANDSYSTEM**
SEALING SLEEVE WITH SEALING WEB AND LIGHT STRIP SYSTEM EQUIPPED THEREWITH
MANCHON D'ÉTANCHÉITÉ POURVU DE NERVURE D'ÉTANCHÉITÉ ET SYSTÈME DE BANDE LUMINEUSE ÉQUIPÉ D'UN TEL MANCHON

(30) Priorität: 08.04.2021 DE 102021108714
(43) Veröffentlichungstag der Anmeldung: 12.10.2022
(73) Patentinhaber: Zumtobel Lighting GmbH, 6850 Dornbirn (AT)
(72) Erfinder: FEUERLE, Helmut, 6850 Dornbirn (AT); KOHLER, Christian, 6850 Dornbirn (AT)
(74) Vertreter: Kiwit, Benedikt

(56) Entgegenhaltungen:
- EP-A1- 3 653 925
- DE-A1- 102015 121 473
- DE-C2- 3 636 412
- DE-U- 1 981 374

## Beschreibung

Die vorliegende Erfindung betrifft eine Dichtmanschette zum Abdichten wenigstens zweier stirnseitig in einem Stoßbereich aneinander angrenzender und sich jeweils von dem Stoßbereich weg entlang einer jeweiligen Längsachse erstreckender Lichtbandelemente, wie Lichtbandtragschienen und Endkappen, eines Lichtbandsystems, sowie ein mit der Dichtmanschette ausgestattetes Lichtbandsystem.

Aus dem Stand der Technik sind Lichtbandsysteme hinlänglich bekannt. Diese weisen in der Regel mehrere meist längs aneinandergereihter Lichtbandtragschienen auf. Die länglichen Tragschienen umgeben dabei einen Innenraum, in dem bspw. eine Verkabelung des Lichtbandsystems längs hindurchgeführt ist. Über eine meist nach unten offene Seite der Tragschienen können elektrische und/oder elektronische Komponenten, wie bspw. Lichtbänder, eingesetzt und mit der Verkabelung elektrisch gekoppelt werden. So kann bevorzugt ein zusammenhängendes, durchgehendes Lichtband bereitgestellt werden. Die aneinandergereihten Tragschienen werden in einem diese verbindenden, stirnseitigen Stoßbereich meist mittels eines Verbinders zusätzlich mechanisch miteinander verbunden und fixiert. Die in Längsrichtung gesehenen Enden der Tragschienen können zudem mit Endkappen abgeschlossen werden.

Insbesondere die Stoßbereiche zweier Lichtbandelemente bilden eine Schwachstelle bei Bereitstellung von Lichtbandsystemen mit darin integriertem Stromführungssystem höherer Schutzart, wie bspw. IP6₄ und mehr. So kann insbesondere über diese Stoßbereiche Wasser in das Innere des Systems eindringen oder wandern. Dies umso mehr, als dass z.B. eine betriebsbedingte (bspw. temperaturbedingte) Längenänderung der Tragschienen zu einer Spaltbildung im Stoßbereich führen kann.

Aus dem Stand der Technik ist es bekannt, Lichtbandsysteme der vorbeschriebenen Art gemäß definierter IP-Schutzklassen auszuführen, indem die Stoßbereiche entsprechend abgedichtet werden. So ist es bspw. bekannt, in dem Stoßbereich eine Dichtung vorzusehen, welche meist als Weichkomponente ausgeführt ist. Diese Dichtung weist bisweilen mittig eine nach innen vorragende, umlaufenden Dichtplatte auf, welche in den Stoßbereich ragt und an welcher die Stirnseiten der benachbarten Tragschienen bei der Montage abdichten. Dies erfordert jedoch eine besonders exakte Montage der Teile, sodass das System auch im Nachhinein möglichst dicht ist. Insbesondere unter extremen Temperaturschwankungen kann eine derartige Dichtmanschette aufgrund entsprechender, temperaturbedingter Längenänderung der Lichtbandelemente dennoch anfällig für eine Spaltbildung sein.

Es sind ebenso Lösungen bekannt, bei welchen nicht mehr in dem Stoßbereich selbst abgedichtet wird, sondern wo eine Dichtung an der Außenseite der Lichtbandelemente sich geschlossen über den Stoßbereich erstreckt und beidseits des Stoßbereichs jeweils mit einem vorragenden Dichtelement dichtend anliegt. Aufgrund der äußeren Dichtanlage und notwendigen Beabstandung der Dichtelemente erfordert diese Lösung einen vergleichsweise großen Raumbedarf.

Aus der DE 1 981 374 U ist ein Lichtband aus stirnseitig offenen Feuchtraumleuchten bekannt.

Zur Montage dieses Lichtbandes werden die einzelnen Feuchtraumleuchten mit ihren Enden in ringsumlaufende Nuten von muffenartigen Verbindungsgliedern aus elastischem Material geschoben. Eine besonders wirksame Abdichtung gegen Feuchtigkeit und Staub entsteht dadurch, dass in den Nuten der Verbindungsglieder ringsumlaufende rillenartige Quervertiefungen vorgesehen sind.

Aus der DE 36 36 412 C2 ist eine Vorrichtung zum Verbinden von endseitig einander gegenüberliegenden Kabelkanälen bekannt. Als Verbinder ist ein Formteil von im wesentlichen H-förmigem Querschnitt, gebildet von zwei mittels eines wärmeschrumpfbaren Formteilsteges miteinander verbundenen Formteilflanschen, vorgesehen. Stirnseitig einander zugewandten Wandungsendteile der zu verbindenden Kabelkanäle sind zwischen die Formteilflansche so eingesteckt, dass der Formteilsteg zwischen den Stirnseiten der Kabelkanäle angeordnet ist. Der Formteilsteg wird durch Wärmeeinwirkung so geschrumpft, dass die Wandungsendteile der Kabelkanäle zwischen den Formteilflanschen zumindest kraftschlüssig eingespannt sind.

Aus der EP 3 653 925 A1 ist ein System einer in Längsrichtung langgestreckten Leuchte mit zumindest zwei in Längsrichtung angeordneten Systembauteilen und einer Dichteinrichtung zum Abdichten der in Längsrichtung angeordneten Systembauteilen bekannt. Jedes Systembauteil weist eine insbesondere in Längsrichtung langgestreckte Tragschiene, eine in Längsrichtung langgestreckte Abdeckung und eine in Längsrichtung langgestreckt ausgebildeten Geräteträger auf. Die Dichteinrichtung zum Abdichten zweier in Längsrichtung angeordneter Systembauteile umfasst ein Oberteil und ein Unterteil, wobei das Oberteil eine Dichtlippe aufweist. Diese Dichtlippe ist zur abdichtenden Anlage an der Tragschiene der Systembauteile ausgebildet.

Aus der DE 10 2015 121473 A1 geht ein Lichtbandsystem mit zwei Lichtbandelemente, die kollinear erstreckend entlang einer gemeinsamen Leuchtenlängsachse stirnseitig aneinandergesetzt sind, hervor. Jedes Lichtbandelement weist eine im Wesentlichen dach- oder domförmig gestalteten Tragschiene und eine Leuchtenkapsel auf. Die Leuchtenkapsel ist so mit der Tragschiene verrastet, dass sie dichtend aneinander anliegen. An den Stoßstellen der stoßseitig miteinander verbundenen Lichtbandelemente ist ein Verbinder mit einem Mittelsteg vorgesehen, der sich in Einbaulage quer zur Längsachse des Lichtbands erstreckt und die Dichtebene bildet. Am äußeren Umfangsrand sind beidseitig von diesem Mittelsteg abstehende Längsdichtungslippen angeformt, die in Einbaulage dichtend an einer Außenseite der Tragschienen und der Leuchtenkapsel anliegen bzw. diese außenseitig umfassen. Der Verbinder weist weiter beidseitig von dem Mittelsteg in Längsrichtung des Lichtbands abragende Dichtstege auf. In den gegenüberliegenden bzw. angrenzenden Stirnenden der Leuchtenkapseln ist jeweils ein Dichtkopfstück angeordnet. Am Dichtkopfstück ist ein Außenrand vorgesehen, der an der jeweiligen Leuchtenkapsel anliegt. An den Rändern des in die Leuchtenkapsel ragenden Innenstegs ist jeweils eine Dichtlippen vorgesehen, die in Einbaulage dichtend an der Unterseite der Dichtstege des Verbinders anliegt.

Es ist somit eine Aufgabe der vorliegenden Erfindung, eine Dichtmanschette sowie ein damit ausgestattetes Lichtbandsystem bereitzustellen, welche gleichzeitig eine einfache, platzsparende und sichere Abdichtung eines entsprechenden Stoßbereichs in einem Lichtbandsystem ermöglichen.

Diese Aufgabe wird durch den Gegenstand der unabhängigen Ansprüche gelöst. Die abhängigen Ansprüche bilden den zentralen Gedanken der vorliegenden Erfindung in besonders vorteilhafter Weise weiter.

Gemäß einem ersten Aspekt betrifft die vorliegende Erfindung eine Dichtmanschette zum Abdichten wenigstens zweier stirnseitig in einem Stoßbereich aneinander angrenzender und sich jeweils von dem Stoßbereich weg entlang einer jeweiligen Längsachse erstreckender Lichtbandelemente, wie Lichtbandtragschienen und Endkappen, eines Lichtbandsystems. Die Dichtmanschette weist dabei einen Dichtungsträger und ein Dichtelement auf. Der Dichtungsträger weist je Lichtbandelement einen Trägerteil zur Aufnahme jeweiliger dem Stoßbereich zugewandter Längsstirnseiten der Lichtbandelemente auf. Jeder Trägerteil umgibt einen sich um eine Trägerteillängsachse (welche bevorzugt der jeweiligen Längsachse entspricht bzw. parallel zu der jeweiligen Längsachse ausgerichtet ist) erstreckenden Aufnahmeraum zur Aufnahme der jeweiligen Längsstirnseite wenigstens teilweise umlaufend; mithin weist also jeder Trägerteil einen solchen Aufnahmeraum auf. Das Dichtelement weist einen Dichtsteg auf, welcher von dem Dichtungsträger derart in einer Erstreckungsrichtung vorsteht, so dass der Dichtsteg die Aufnahmeräume voneinander trennt und in Einbaulage in den Stoßbereich zur stirnseitig dichtenden Anlage an den Lichtbandelementen ragt. Von dem Dichtsteg erstrecken sich je Aufnahmeraum wenigstens zwei in Erstreckungsrichtung zueinander versetzt angeordnete und quer zur Erstreckungsrichtung zum Aufnahmeraum hin ragende Querdichtstege zur dichtenden Anlage an den Lichtbandelementen; (mithin also bevorzugt mit Dichtwirkung im Wesentlichen in Richtung parallel zur jeweiligen Trägerteillängsachse bzw. Längsachse).

Da das Dichtelement der erfindungsgemäßen Dichtmanschette nur einen - vorzugsweise zentralen - Dichtsteg aufweist, kann die Dichtmanschette insgesamt klein gebaut werden. Da dieser Dichtsteg die zum Aufnahmeraum hin ragenden Querdichtstege aufweist, welche sich also bevorzugt im Wesentlichen in Dichtrichtung erstrecken bzw. vorstehen, können trotz geringer Baugröße ein großes Montagespiel, Wärmeausdehnung und Fertigungstoleranzen sicher aufgenommen werden. Da die Querdichtstege zudem in Erstreckungsrichtung des Steges zueinander versetzt angeordnet sind - mithin also bevorzugt in wenigstens zwei Reihen angeordnet sind -, kann auch quer zur Dichtrichtung eine sichere Dichtung bereitgestellt werden. So kann bspw. bei unterschiedlich großen Lichtbandelementen immer wenigstens einer der Querdichtstege in dichtende Anlage gebracht werden, was die Sicherheit der Dichtfunktion erhöht. So können bspw. auch pro Lichtbandelement wenigstens die zwei unabhängigen Querdichtstege wirken, was die Dichtfunktion weiter erhöht. Beispielsweise kann der in Erstreckungsrichtung entfernte Querdichtsteg die Dichtaufgabe übernehmen, sollte der näher am Dichtungsträger liegende Querdichtsteg versagen. Zudem kann der gegebene Aufbau mit den wenigstens zwei zueinander versetzten Querdichtstegen eine Art Labyrinthdichtung darstellen, durch welche eine verbesserte zuverlässige Dichtung erzielt werden kann. Somit kann insgesamt eine einfach zu montierende Dichtmanschette bereitgestellt werden, welche in einem Stoßbereich zwischen zwei Lichtbandelementen einfach vorgesehen werden kann. Diese aneinander angrenzenden Lichtbandelemente können entweder wenigstens zwei bzw. eine Mehrzahl von Lichtbandtragschienen oder wenigstens eine Lichtbandtragschiene und eine diese stirnseitig abdeckende Endkappe und dergleichen sein. Insofern lässt sich die Dichtmanschette auch komponentenübergreifend in einfacher Weise vorsehen.

Die Querdichtstege erstrecken sich vorzugsweise umlaufend entlang wenigstens eines Teils oder des gesamten Dichtstegs. Die Querdichtstege können so entsprechend der abzudichtenden Bereiche optimiert und Material-schonend ausgestaltet werden.

Die zu demselben Aufnahmeraum hin ragenden Querdichtstege können sich vorzugsweise umlaufend wenigstens teilweise entlang desselben Abschnitts des Dichtsteges erstrecken. Somit kann entlang der definierten Abschnitte eine bevorzugt auf die abzudichtenden Lichtbandelemente optimierte und besonders sichere Abdichtung erzielt werden.

Die zu demselben Aufnahmeraum hin ragenden Querdichtstege sind bevorzugt konzentrisch zueinander angeordnet. Somit kann ein einfacher Aufbau des Dichtelements bereitgestellt werden. Zudem bietet die konzentrische Anordnung der Querdichtstege eine besonders sichere Abdichtung, da die benachbarten Bereiche für eine redundante oder zwingend alternative Dichtwirkung sorgen können.

Die Querdichtstege sind bevorzugt als Dichtlippen ausgebildet. Sie sind also bevorzugt quer zu ihrer Erstreckungsrichtung flexibel bzw. längs der Erstreckungsrichtung stauchbar bereitgestellt. Somit können Montagespiel, Wärmeausdehnung und Fertigungstoleranzen trotz der insgesamt kompakten Bauweise der Dichtmanschette besonders sicher aufgenommen werden.

Die zu demselben Aufnahmeraum hin ragenden Querdichtstege können sich gleich weit vom Dichtsteg weg erstrecken. Somit kann eine gleichmäßige und sichere Dichtung erzielt werden, auch wenn die Lichtbandelemente quer zur Trägerteillängsachse oder Längsachse nicht akkurat positioniert sind.

Die zu demselben Aufnahmeraum hin ragenden Querdichtstege können sich parallel zu der jeweiligen Trägerteillängsachse erstrecken. Somit kann eine sichere stirnseitige Dichtanlage gewährleistet werden. Dies gilt auch bei besonders flexiblen Querdichtstegen, welche bei dieser Ausrichtung so nur wenig oder gar nicht zum Auswandern quer zur Dichtrichtung tendieren.

Wenigstens die zu demselben Aufnahmeraum hin ragenden Querdichtstege, vorzugsweise alle Querdichtstege, erstrecken sich bevorzugt parallel zueinander von dem Dichtsteg weg. Diese Ausgestaltung ermöglich die sichere Verwendung von gleichen Lichtbandelementen sowie eine gleichmäßige Verteilung der durch die Dichtanlage ausgebübten Kräfte; dies im Übrigen auch bei Verwendung unterschiedlicher abzudichtender Lichtbandelemente.

Vorzugsweise erstreckt sich das Dichtelement von dem Dichtsteg aus über wenigstens einen Teil der zu den jeweiligen Aufnahmeräumen gerichteten Seite der Trägerteile als Dichtungswand. Mittels einer sich so erstreckenden Dichtungswand kann bei Bedarf eine außen umfängliche Dichtwirkung auf dem abzudichtenden Lichtbandelement bereitgestellt werden. Das Dichtelement mit Dichtsteg und Dichtungswand ist dabei bevorzugt integral bzw. einstückig ausgebildet und somit besonders materialschonend und kostengünstig herstellbar und verbaubar.

Das jeweilige Trägerteil oder, wenn vorhanden, die jeweilige Dichtungswand entfernt sich vorzugsweise entlang der Trägerteillängsachse mit zunehmendem Abstand vom Dichtsteg weiter von der Trägerteillängsachse; dies vorzugsweise kontinuierlich oder diskontinuierlich. Mithin erstreckt sich die Dichtungswand - bspw. bzgl. der Trägerteillängsachse - schräg von dem Dichtsteg weg. Bei einfacher Herstellung des Dichtelements oder der Dichtmanschette - bspw. in einem Spritzgussprozess oder einem Zweikomponenten-Spritzgussprozess - kann so die schräge Dichtungswand eine Art Entformungsschräge bilden. Die schräge Dichtungswand kann auch im Betrieb als Spritzschutzwand dienen und bspw. einen von außen auf den Dichtsteg gerichteten Wasserstrahl ablenken und so die stirnseitige Dichtstelle des Dichtstegs entlasten.

Das Dichtelement kann als ein- oder mehrteiliges Kunststoff-Spritzgussteil gebildet sein. So kann das Dichtelement in einfacher Weise mittels herkömmlicher Herstellungsverfahren bereitgestellt werden. Das Dichtelement kann bevorzugt aus Thermoplastischen Elastomeren (TPE) oder Polyurethan (PU) hergestellt sein. Auch andere Dichtmaterialien sind denkbar, wie Silikon. Bevorzugt sind Dichtmaterialien, welche sich in einem Spritzgussverfahren als Einlegeteil oder als Spritzgussmaterial für ein Zweikomponenten-Spitzgussverfahren eignen.

Der Dichtungsträger sowie das Dichtelement sind bevorzugt miteinander verbunden; dies lösbar oder unlösbar. Das Dichtelement, vorzugsweise wenigstens der Dichtsteg, kann auf den Dichtungsträger aufgebracht sein, vorzugsweise aufgeklebt, aufgeschnappt, aufgeklemmt oder aufgeschäumt. Selbstverständlich sind auch andere Verbindungsarten denkbar. Somit kann die Dichtmanschette je nach Bedarf und verwendetem Material in beliebiger Weise hergestellt werden.

Die Erstreckungsrichtung des Dichtstegs ist bevorzugt senkrecht zu wenigstens einer, mehreren oder allen Trägerteillängsachsen ausgerichtet. Somit ragt der Dichtsteg möglichst gleichmäßig und geradlinig nach innen vor, um so nach beiden/mehreren/allen Seiten - also zu beiden/mehreren/allen Aufnahmeräumen hin - eine sichere Dichtanlage und Abstützung der Querdichtstege zu bieten.

Die Trägerteile können integral miteinander ausgebildet sein. Somit bildet der Dichtungsträger ein integrales Bauteil. Grundsätzlich ist es auch denkbar, dass die Trägerteile separat bereitgestellt sind. Die integrale Ausgestaltung hat jedoch den Vorteil eines einfacheren Handlings sowie eines insgesamt stabileren Dichtungsträgers, welcher insbesondere zur Stabilisierung der Dichtmanschette im Dichtbereich vorgesehen ist.

Der Dichtungsträger kann als bevorzugt integrales Kunststoff-Spritzgussteil gebildet sein. Der Dichtungsträger kann aus PP (Polypropylen), PC (Polycarbonat), PPA (Polyphtalamid) oder POM (Polyoxymethylen) hergestellt sein. Insbesondere ist der Dichtungsträger bevorzugt aus einem möglichst formstabilen Material (insbesondere Kunststoff) hergestellt, da er der Dichtmanschette bevorzugt ihre Stabilität verleihen soll und insbesondere als Tragelement für das Dichtelement und Koppelelement mit den Lichtbandelementen dient. Besonders bevorzugt ist der Dichtungsträger derart steif ausgebildet, um in Einbaulage den Dichtsteg dauerhaft in der dichtenden Anlage zu halten.

Der Dichtungsträger und das Dichtelement sind bevorzugt integral miteinander verbunden oder ausgebildet. Vorzugsweise sind sie in einem Spritzgussverfahren hergestellt. Dabei können sie bspw. besonders bevorzugt in einem Zweikomponenten-Spritzgussverfahren hergestellt sein. Alternativ ist es auch denkbar, dass die genannten Komponenten unter Verwendung des Dichtelements als Einlegeteil zur Einlage in eine Spritzgussform zur Herstellung des Dichtungsträgers in einem (herkömmlichen) Spritzgussverfahren hergestellt sind. Auf diese Weise kann eine einfache Herstellung der Dichtmanschette bei gleichzeitig sicherer Verbindung ihrer Komponenten erzielt werden.

Die Dichtmanschette, insbesondere der Dichtungsträger oder dessen Trägerteile, kann bzw. können zu dem oder den Aufnahmeräumen hin vorstehende Haltestrukturen aufweisen, um in Einbaulage sich mit dem/den jeweiligen Lichtbandelement(en) formschlüssig und/oder kraftschlüssig zu verbinden; vorzugsweise, um die jeweiligen Lichtbandelemente wenigstens quer zur Längsachse oder Trägerteillängsachse formschlüssig und/oder kraftschlüssig zu umgreifen bzw. allgemein sich mit diesen entsprechend zu verbinden. Auf diese Weise kann eine sichere mechanische Kopplung der Dichtmanschette zu den entsprechenden Lichtbandelementen, an denen diese vorzusehen ist, ermöglicht werden. Dies ermöglicht zum einen eine sichere mechanische Halterung und zum anderen ein sicheres Aufrechterhalten der mit der Dichtmanschette erzeugten Abdichtwirkung. Denn so kann bspw. das Dichtelement sicher in der Dichtposition platziert und dort dauerhaft gehalten werden. Auch kann bspw. bei Vorliegen einer Dichtungswand so mittels einer entsprechenden mechanischen Verbindung der Dichtmanschette ein hoher Anpressdruck des Dichtelements auch auf der Außenseite der Lichtbandelemente erzeugt und sicher aufrechterhalten bleiben.

Die Dichtmanschette kann in Richtung der Trägerteillängsachse gesehen oder auch in Einbaulage in Richtung der Längsachse gesehen einen zusammenhängenden, über eine offene Seite einseitig offenen Querschnitt aufweisen. Dieser Querschnitt kann vorzugsweise ein im Wesentlichen U-förmiger Querschnitt sein. Auch andersartige, einseitige offene Querschnitte, wie bspw. ein V-förmiger Querschnitt oder ein C-förmiger Querschnitt, sind denkbar. Somit kann die Dichtmanschette in beliebiger Weise bevorzugt entsprechend einer außenseitigen Querschnittskontur eines entsprechenden Lichtbandelements, an dem die Dichtmanschette vorgesehen werden soll, ausgebildet sein bzw. bereitgestellt werden.

Die offene Seite ist bevorzugt seitlich von distalen Endabschnitten des Dichtungsträgers begrenzt. Bevorzugt erstrecken sich von diesen Endabschnitten weg die Haltestrukturen. Somit kann eine insgesamt einfache Gesamtstruktur der Dichtmanschette bei wirkungsvollem Aufbau bereitgestellt werden.

Die Trägerteillängsachsen können parallel oder auch quer bzw. schräg zueinander verlaufen, wobei sich die Trägerteillängsachsen besonders bevorzugt schneiden und ganz besonders bevorzugt in einem Punkt schneiden. Somit kann eine Dichtmanschette bereitgestellt werden, welche für jegliche beliebige Art zueinander orientierter Lichtbandelemente bzw. Ausrichtung von deren Längsachsen eingesetzt werden kann.

Der Dichtungsträger kann wenigstens zwei oder auch mehr Trägerteile aufweisen. Somit kann die Dichtmanschette für beliebige und beliebig viele, stirnseitig aneinander angrenzende Lichtbandelemente eines Lichtbandsystems eingesetzt werden.

Die Trägerteillängsachsen verlaufen bevorzugt in einer Ebene. Auf diese Weise kann ein sich in einer Ebene erstreckendes Lichtbandsystem mittels der Dichtmanschette ausgestattet werden.

Gemäß einem weiteren Aspekt betrifft die vorliegende Erfindung ferner ein Lichtbandsystem, welches mehrere Lichtbandelemente, wie Lichtbandtragschienen und Endkappen, sowie eine Dichtmanschette gemäß der vorliegenden Erfindung aufweist. Jeweils wenigstens zwei der Lichtbandelemente grenzen stirnseitig in einem Stoßbereich aneinander an und erstrecken sich jeweils von dem Stoßbereich weg entlang einer jeweiligen Längsachse, um ein zusammenhängendes System zu bilden. Je Stoßbereich weist das Lichtbandsystem bevorzugt eine Dichtmanschette auf. Je Stoßbereich weist die zugeordnete Dichtmanschette eine der Anzahl der in diesem Stoßbereich aneinander angrenzenden Lichtbandelemente entsprechende Anzahl an Aufnahmeräumen auf. Jeweils ein Stirnbereich bzw. eine Längsstirnseite der Lichtbandelemente ragt derart in einen der Aufnahmeräume, sodass je Lichtbandelement wenigstens einer der zugeordneten Querdichtstege in wenigstens teilweise umlaufender, dichtender Anlage an einer Längsstirnseite bzw. Stirnfläche des/dieses Lichtbandelements steht; mithin also bevorzugt in im Wesentlichen axialer Dichtanlage bzgl. der Längsachse bzw. der Trägerteillängsachse.

Auf diese Weise kann ein beliebig gestaltetes Lichtbandsystem bevorzugt mit herkömmlichen Lichtbandelementen zur Bereitstellung desselben mit einer hohen IP Schutzklasse (bspw. IP64 und mehr) ausgestattet bzw. bereitgestellt werden. Beispielsweise kann so auch ein bereits bestehendes System nachträglich in seiner IP Schutzklasse erhöht werden. Die weiteren Vorteile ergeben sich hier in gleicher Weise wie diejenigen, welche bereits zur Dichtmanschette oben beschrieben wurden.

Die Lichtbandelemente können bevorzugt mit ihrer Längsstirnseite bzw. Stirnfläche mit einem definierten Anpressdruck oder Mindestanpressdruck in Richtung der Längsachse bzw. Trägerteillängsachse gesehen an dem Dichtsteg oder den jeweiligen Querdichtstegen dichtend anliegen. Der Anpressdruck kann dabei bevorzugt durch unterschiedliche Merkmale der miteinander dichtend wirkenden Komponenten mit beeinflusst werden (bspw. über deren Dimension, relative Position, Material, Materialkombination, etc.), wobei der Dichtungsträger dann entsprechend ausgebildet ist, diesem standzuhalten. Der Dichtungsträger bietet der Dichtmanschette somit eine entsprechende Steifigkeit und Formstabilität, sodass dieser in Verbindung mit den entsprechenden Lichtbandelementen für eine definierte, ausreichende Abdichtwirkung des Dichtelements sorgen kann.

Die Dichtmanschette ist bevorzugt mit den jeweiligen Lichtbandelementen mechanisch gekoppelt. Dies vorzugsweise mittels Kraft- und/oder Formschluss. Besonders bevorzugt wird die mechanische Kopplung mittels der Haltestrukturen erzielt. Durch mechanische Kopplung kann zum einen das Lichtbandsystem insgesamt stabiler ausgebildet werden. Zum anderen kann die Dichtwirkung der Dichtmanschette so besonders sicher und definiert positioniert aufrechterhalten werden. So können die Querdichtstege besonders akkurat platziert werden, wodurch auch größeres Montagespiel, Wärmeausdehnung und Fertigungstoleranzen besser und sicher aufgenommen werden können.

Die oder zumindest ein Teil der aneinander angrenzenden Lichtbandelemente sind bevorzugt mittels eines Verbinders mechanisch miteinander gekoppelt, um ein Auseinanderwandern einzelner Lichtbandelemente relativ zueinander - insbesondere in Richtung der Längsachse - möglichst gering zu halten oder zu vermeiden und um bevorzugt dem Lichtbandsystem insgesamt eine hohe Formstabilität zu geben. Des Weiteren kann ein so vorgesehener Verbinder die Lichtbandelemente sicher und dauerhaft in der stirnseitig dichtenden Anlage an dem Dichtsteg bzw. den Querdichtstege halten. Der Verbinder überspannt besonders bevorzugt den Stoßbereich auf einer von dem Dichtungsträger abgewandten Seite der jeweiligen Lichtbandelemente; bevorzugt ist der Verbinder in einem Innenraum bzw. an einer Innenseite der Lichtbandelemente angeordnet. Somit ist der Verbinder möglichst wirkungsvoll und gleichzeitig versteckt vorgesehen.

Zwischen Dichtungsträger oder dem Trägerteil oder der Dichtungswand einerseits und dem jeweiligen Lichtbandelement andererseits kann sich bevorzugt ein (bspw. im Querschnitt nach außen offener) Spalt erstrecken, welcher in Richtung der Längsachse gesehen zu dem Dichtsteg hin zuläuft. Auf diese Weise kann eine wirkungsvolle Spritzschutzwand bereitgestellt werden, welche einen auf die Dichtmanschette und insbesondere den Dichtsteg gerichteten Wasserstrahl wirkungsvoll entkräftet.

Die Lichtbandelemente weisen bevorzugt wenigstens eine oder mehrere längliche Lichtbandtragschienen auf. Diese weisen bevorzugt jeweils einen Innenraum zur Aufnahme elektrischer und/oder elektronischer Komponenten auf. Bevorzugt bildet/bilden die Lichtbandtragschiene(n) einen zusammenhängenden Innenraum zur Aufnahme elektrischer und/oder elektronischer Komponenten. Somit kann ein insgesamt flexibel gestaltbares Lichtbandsystem bereitgestellt werden.

Die Lichtbandtragschiene kann in Richtung seiner Längsachse gesehen einen zusammenhängenden, über eine offene Trägerseite einseitig offenen Querschnitt aufweisen. Dabei kann es sich bevorzugt um einen im Wesentlichen U-förmigen Querschnitt oder auch einen anders gestalteten, einseitig offenen Querschnitt, wie bspw. einen V-förmigen Querschnitt oder einen C-förmigen Querschnitt, handeln. Somit können auch gängige Lichtbandtragschienen mit der erfindungsgemäßen Dichtmanschette zur Bildung eines Lichtbandsystems unter Erzielung einer höheren IP Schutzklasse bereitgestellt werden.

Das Lichtbandsystem kann ferner wenigstens eine oder mehrere elektrische und/oder elektronische Komponenten, wie ein Lichtband, aufweisen. Diese Komponente(n) ist/sind bevorzugt mit wenigstens einem der entsprechenden Lichtbandelemente mechanisch und gegebenenfalls auch elektrisch gekoppelt. Die Komponente kann sich dabei auch übergreifend über wenigstens zwei benachbarte Lichtbandelemente erstrecken. Die Komponente(n) verschließt/verschließen vorzugsweise die offene Trägerseite; dies besonders bevorzugt dichtend. Letzteres weiter bevorzugt, um mit der Dichtmanschette sowie dem oder den Lichtbandelement(en) zusammen einen vollständig nach außen umschlossenen Systemraum zu begrenzen, welcher ganz besonders bevorzugt insgesamt im Sinne einer definierten hohen bzw. höheren IP Schutzklasse (bspw. IP64 und mehr) ausgebildet ist.

Weitere Ausgestaltungen und Vorteile der vorliegenden Erfindung werden nunmehr anhand der Figuren der begleitenden Zeichnungen beschrieben. Es zeigen:
- Fig. 1: eine perspektivische Oberansicht auf eine Dichtmanschette gemäß einem Ausführungsbeispiel der vorliegenden Erfindung,
- Fig. 2: eine perspektivische Unteransicht der erfindungsgemäßen Dichtmanschette gemäß Fig. 1,
- Fig. 3: eine stirnseitige Ansicht der erfindungsgemäßen Dichtmanschette gemäß Fig. 1,
- Fig. 4: eine seitliche Schnittansicht der erfindungsgemäßen Dichtmanschette gemäß Fig. 1 entlang der Schnittlinie IV-IV gemäß Fig. 3,
- Fig. 5: eine Detailansicht des Details Z der erfindungsgemäßen Dichtmanschette gemäß Fig. 4,
- Fig. 6: eine perspektivische Teilansicht eines Lichtbandsystems gemäß einem Ausführungsbeispiel der vorliegenden Erfindung mit einer erfindungsgemäßen Dichtmanschette gemäß Fig. 1,
- Fig. 7: eine seitliche Teilansicht des erfindungsgemäßen Lichtbandsystems gemäß Fig. 6,
- Fig. 8: eine seitliche Querschnitts-Teilansicht des erfindungsgemäßen Lichtbandsystems gemäß Fig. 6, und
- Fig. 9: eine Detailansicht des Details Y des erfindungsgemäßen Lichtbandsystems gemäß Fig. 8.

Die Figuren zeigen eine Ausführungsform einer erfindungsgemäßen Dichtmanschette 1 zum Abdichten wenigstens zweier stirnseitig in einem Stoßbereich S aneinander angrenzender und sich jeweils von dem Stoßbereich S weg entlang einer jeweiligen Längsachse L erstreckender Lichtbandelemente 101, wie Lichtbandtragschienen und Endkappen, eines Lichtbandsystems 100. Zunächst wird im Folgenden die erfindungsgemäße Dichtmanschette 1 beschrieben und im Anschluss daran das mit dieser Dichtmanschette 1 ausgestattete Lichtbandsystem 100.

Die Dichtmanschette 1 weist zwei Komponenten auf, nämlich einen Dichtungsträger 2 und ein Dichtelement 3.

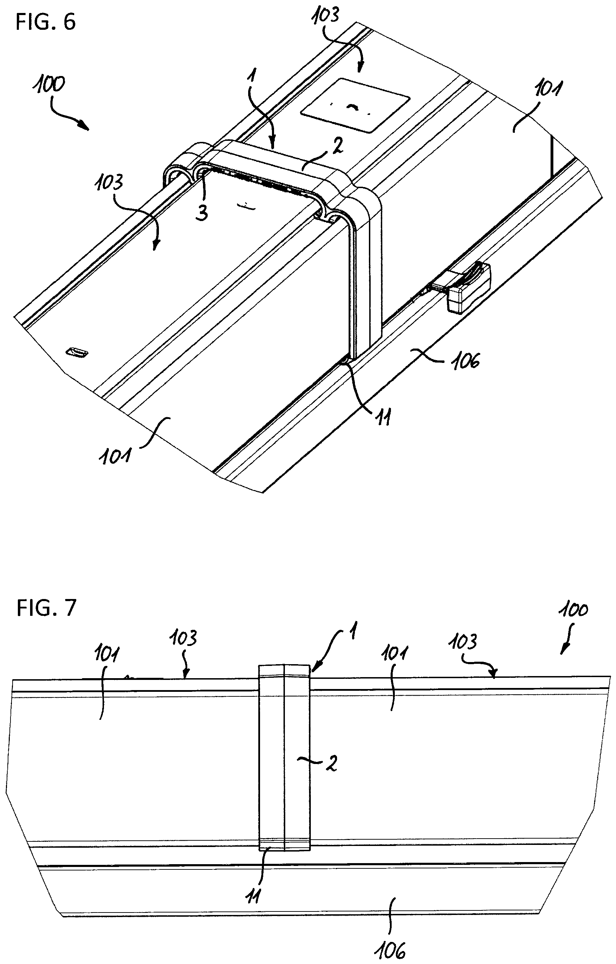

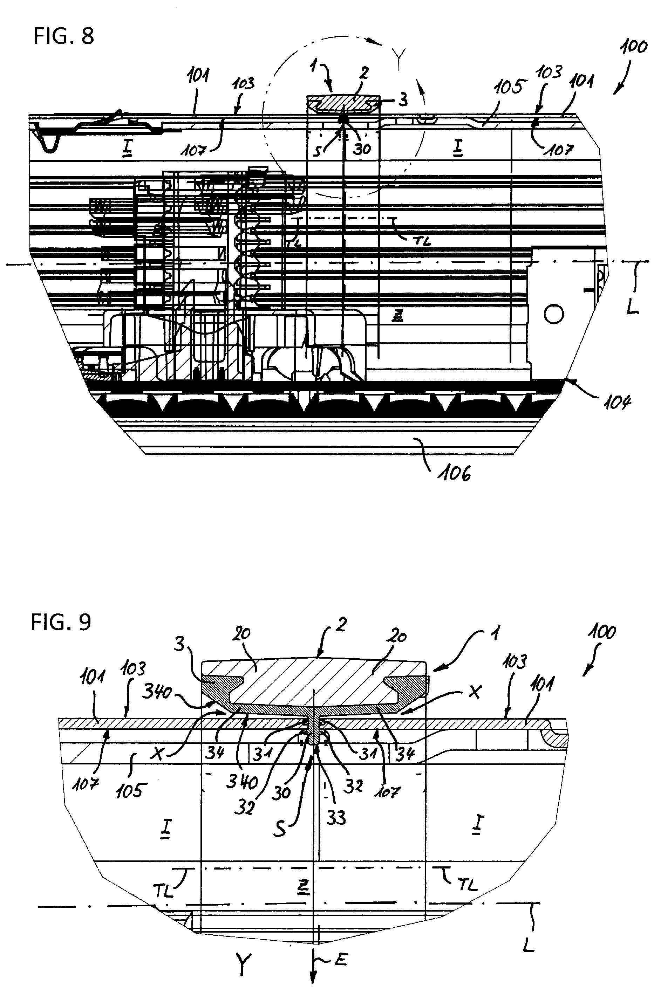

Der Dichtungsträger 2 weist je Lichtbandelement 101 einen Trägerteil 20 zur Aufnahme der jeweiligen dem Stoßbereich S zugewandten Stirnbereiche bzw. Längsstirnseiten 102 der Lichtbandelemente 101 auf. Jeder Trägerteil 20 umgibt dabei einen sich um eine Trägerteillängsachse TL erstreckenden Aufnahmeraum 21 wenigstens teilweise umlaufend, welcher der Aufnahme eines jeweiligen der genannten Stirnbereiche bzw. Längsstirnseiten 102 dient. Wie die jeweiligen Stirnbereiche bzw. Längsstirnseiten 102 der Lichtbandelemente 101 beispielhaft in dem entsprechenden Aufnahmeraum 21 aufgenommen sein können, ergibt sich bspw. aus den Ansichten der Fig. 6 und 7 sowie aus den Schnittdarstellungen der Fig. 8 und 9.

Die Trägerteile 20 können, wie in dem Ausführungsbeispiel dargestellt, integral miteinander ausgebildet sein; somit also einen integralen Dichtungsträger 2 bilden. Der Dichtungsträger 2 ist bevorzugt als integrales Kunststoff-Spritzgussteil gebildet. Der Dichtungsträger 2 kann dabei bspw. aus PP, PC, PPA oder POM hergestellt sein.

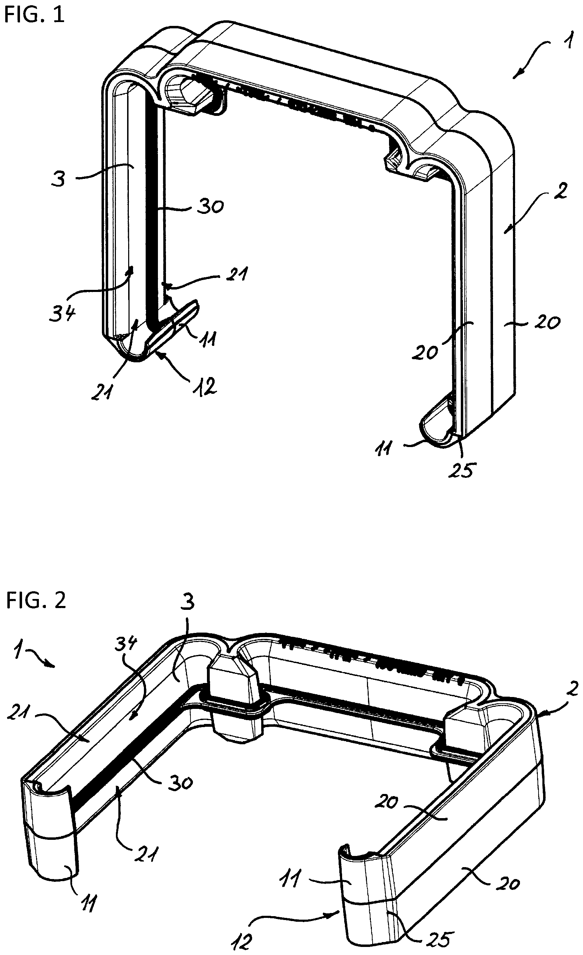

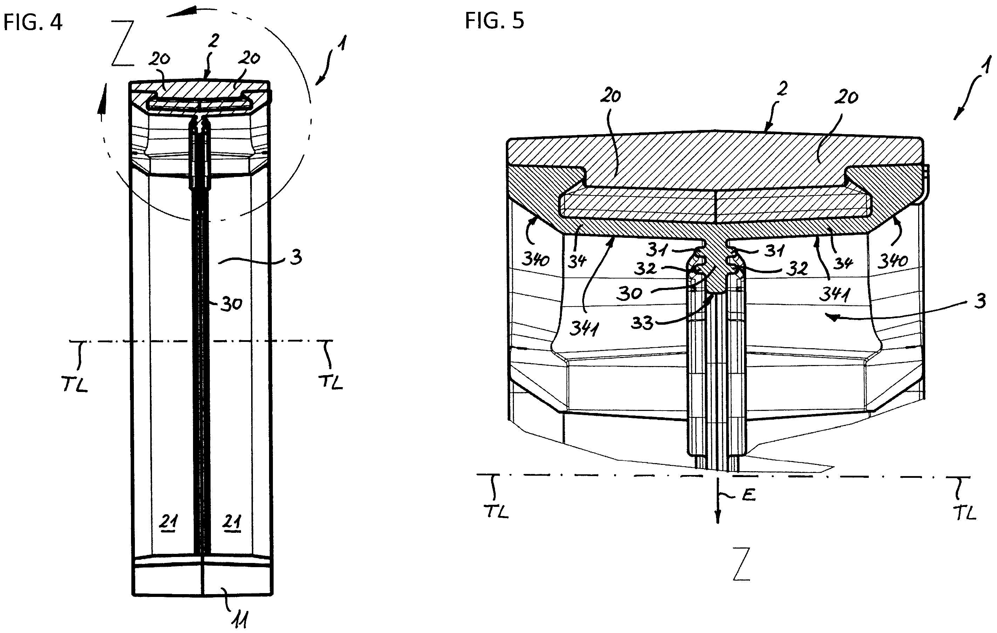

Das Dichtelement 3 weist einen Dichtsteg 30 auf, welcher von dem Dichtungsträger 2 derart in einer Erstreckungsrichtung E (hier in Fig. 5 für den im Querschnitt dargestellten Abschnitt des Dichtungsstegs 30 gezeigt) vorsteht, so dass der Dichtsteg 30 die Aufnahmeräume 21 trennt, wie dies insbesondere den Fig. 1, 2, 4 und 5 zu entnehmen ist. Der Dichtsteg 30 ist hier beispielhaft bevorzugt mittig der Dichtmanschette 1 bzw. des Dichtungsträgers 2 - bspw. bzgl. bzw. entlang der hier fluchtenden Trägerteillängsachsen TL - angeordnet. Die Erstreckungsrichtung E ist bevorzugt senkrecht zu wenigstens einer oder - wie gezeigt (vgl. bspw. Fig. 4) - allen Trägerteillängsachsen TL ausgerichtet.

Der Dichtsteg 30 steht ferner von dem Dichtungsträger 2 derart in der Erstreckungsrichtung E vor, so dass er in Einbaulage (vergleiche bspw. die Fig. 8 und 9) in den Stoßbereich S zur stirnseitig dichtenden Anlage an den Lichtbandelementen 101 ragt. Von dem Dichtsteg 30 erstrecken sich je Aufnahmeraum 21 hier wenigstens zwei in Erstreckungsrichtung E zueinander versetzt angeordnete und quer zur Erstreckungsrichtung E zum Aufnahmeraum 21 hin ragende Querdichtstege 31, 32 zur dichtenden Anlage an den Lichtbandelementen 101. Die dichtende Anlage ist in Fig. 9 bezüglich der jeweils hier dem Dichtungsträger 2 zugewandten Querdichtstege 31 gezeigt. Es ist hier deutlich zu erkennen, dass die Bereitstellung der mehreren Querdichtstege 31, 32 für eine sichere Dichtanlage sorgt. So können bspw. bei besonders dicken Lichtbandelementen 101 gleich mehrere der Querdichtstege 31, 32 in dichtende stirnseitige Anlage gebracht werden. Bei dünneren Lichtbandelementen 101 oder größerem Abstand der Querdichtstege 31, 32 in Richtung der Erstreckungsrichtung E kann sichergestellt werden, dass unabhängig von Montagespiel, Fertigungstoleranzen und Wärmeausdehnung immer wenigstens einer der Querdichtstege 31, 32 (hier der obere 31) in stirnseitig dichtender Anlage mit dem jeweiligen Lichtbandelement 101 gebracht werden kann. Beispielsweise sind die jeweiligen Querdichtstege 31, 32 dabei so dimensioniert und positioniert, dass der nicht in stirnseitiger Anlage befindliche Querdichtsteg 32, 31 (hier der untere 32) quer zur Erstreckungsrichtung bzw. zur Trägerteillängsachse TL in dichtender Anlage mit dem Lichtbandelement 101 gebracht werden kann. Wie dargestellt, dichtet hier der untere Querdichtsteg 32 von unten gegen eine Innenseite 107 des Lichtbandelements 101, wodurch die Dichtwirkung der Dichtmanschette 1 noch weiter erhöht werden kann.

Die Querdichtstege 31, 32 können sich, wie Fig. 1 bis 4 zu entnehmen ist, bevorzugt umlaufend entlang wenigstens eines Teils oder hier des gesamten Dichtstegs 30 erstrecken.

Die zu demselben Aufnahmeraum 21 hin ragenden Querdichtstege 31, 32 können sich bevorzugt umlaufend wenigstens teilweise oder, wie dargestellt, gänzlich entlang desselben Abschnitts des Dichtsteges 30 erstrecken. In dem gezeigten Ausführungsbeispiel erstrecken sich die entsprechenden Querdichtstege 31, 32 alle umlaufend entlang des gesamten Dichtstegs 30.

Die zu demselben Aufnahmeraum 21 hin ragenden Querdichtstege 31, 32 sind bevorzugt konzentrisch angeordnet, wie dies den Fig. 4 und 5 deutlich zu entnehmen ist.

Wie den Fig. 1 bis 4, 8 und 9 zu entnehmen ist, können die Querdichtstege 31, 32 als Dichtlippen ausgebildet sein und somit eine besonders hohe bzw. definierbare Flexibilität aufweisen. Je nach Material des Dichtelements 3 sowie Querschnitt und Länge dieser Dichtlippen kann die Dichtwirkung besonders variabel eingestellt werden.

Die zu demselben Aufnahmeraum 21 hin ragenden Querdichtstege 31, 32 erstrecken sich bevorzugt gleich weit vom Dichtsteg 30 weg in den Aufnahmeraum 21 hinein, wie dies beispielsweise der Fig. 5 deutlich zu entnehmen ist, um so die Querdichtstege 31, 32 gleichwirkend bereitzustellen.

Die zu demselben Aufnahmeraum 21 hin ragenden Querdichtstege 31, 32 erstrecken sich bevorzugt parallel zu der jeweiligen Trägerteillängsachse TL, wie dies beispielsweise der Fig. 5 deutlich zu entnehmen ist. Somit kann eine wirkungsvolle stirnseitig dichtende Anlage mit den bevorzugt entlang der Trägerteillängsachse TL einzusetzenden Lichtbandelementen 101 bzw. deren Längsstirnseite 102 erzielt werden, wie dies beispielhaft der Fig. 9 entnommen werden kann.

Wenigstens die zu demselben Aufnahmeraum 21 hin ragenden Querdichtstege 31, 32, vorzugsweise alle Querdichtstege 31, 32 (vgl. bspw. Fig. 5), erstrecken sich bevorzugt parallel zueinander von dem Dichtsteg 30 weg. Somit kann unabhängig vom Querdichtsteg 31, 32 dieselbe Dichtfunktion bereitgestellt werden. Auch kann so, wenn nur einer der Querdichtstege 31, 32 zur stirnseitigen Dichtanlage eingesetzt wird, über dem oder den anderen eine andere Dichtfunktion ermöglicht werden; wie hier bspw. in Richtung der Erstreckungsrichtung E bzw. quer zu einer Erstreckungsrichtung der Querdichtstege 31, 32 vom Dichtsteg 30 in den Aufnahmeraum 21.

Das Dichtelement 3 erstreckt sich vorzugsweise von dem Dichtsteg 30 aus über wenigstens einen Teil der zu den jeweiligen Aufnahmeräumen 21 gerichteten Seite der Trägerteile 20 als Dichtungswand 34. Mithin erstreckt sich die Dichtungswand 34 hier entlang - also in Anlage an - dem jeweiligen Trägerteil 20. Die Dichtungswände 34 sind hier integral mit dem Dichtungssteg 30 ausgebildet, um so ein integrales Dichtelement 30 zu bilden. Mittels der Dichtungswand 34 kann bspw. eine außenseitige Dichtfunktion der Dichtmanschette 1 gegenüber dem Lichtbandelement 101 - also gegenüber einer Außenseite 103 desselben - ermöglicht bzw. verbessert werden.

Das jeweilige Trägerteil 20 oder, wie in Fig. 5 und 9 gezeigt, die jeweilige Dichtungswand 34 kann sich entlang der Trägerteillängsachse TL mit zunehmendem Abstand vom Dichtsteg 30 weiter von der Trägerteillängsachse TL entfernen; dies vorzugsweise kontinuierlich oder, wie gezeigt, diskontinuierlich. Einerseits bildet eine derartige Ausgestaltung eine Entformungsschräge zur einfachen Entformung der Dichtmanschette 1 bei Herstellung derselben in einem Spritzgussprozess, wie einem Zweikomponenten-Spritzgussprozess. Zudem kann die so bereitgestellte schräge Dichtungswand 34 als Spritzschutz bspw. eines Wasserstrahls gegen auf die in Einbaulage befindliche Dichtmanschette 1 dienen. So kann der erste und hier außenliegende Bereich 340 (in Fig. 5 und 9 jeweils ganz rechts und ganz links) bzgl. der Trägerteillängsachse TL hier steil verlaufen und so eine wirkungsvolle Spritzschutzwand bilden. Zum Dichtsteg 30 hin in einem zweiten hier innenliegenden Bereich 341 (hier mittig rechts und links des Dichtstegs 30) verläuft die Dichtungswand 34 dann flacher, um als Spritzschutzwand weiter dienend ein sicheres Fernhalten von eindringendem Wasser und anderen Fremdkörpern zu vermeiden.

Das Dichtelement 3 kann, wie dargestellt, einteilig ausgebildet sein. Grundsätzlich ist jedoch auch eine mehrteilige Ausbildung denkbar. Bevorzugt ist das Dichtelement 3 als ein- oder mehrteiliges Kunststoff-Spritzgussteil gebildet. Auf diese Weise lässt sich das Dichtelement 3 besonders einfach herstellen.

Die vorliegende Erfindung ist nicht auf eine bestimmte Anzahl der mehreren Querdichtstegen 31, 32 je Seite bzw. Aufnahmeraum 21 beschränkt, sofern wenigstens zwei Querdichtstege je Trägerteil 20 entsprechend vorgesehen sind.

Der Dichtungsträger 2 sowie das Dichtelement 3 sind bevorzugt miteinander verbunden und dies besonders bevorzugt unlösbar. Das Dichtelement 3 und vorzugsweise dessen Dichtsteg 30 ist dabei besonders bevorzugt auf den Dichtungsträger 2 aufgebracht, vorzugsweise aufgeklebt, aufgeschnappt, aufgeklemmt oder aufgeschäumt, wie dies den Fig. 5 und 9 besonders deutlich zu entnehmen ist.

Der Dichtungsträger 2 und das Dichtelement 3 sind bevorzugt integral miteinander verbunden oder ausgebildet, wie dies in dem dargestellten Ausführungsbeispiel gezeigt ist. Dabei können diese Komponenten vorzugsweise in einem Spritzgussverfahren hergestellt sein. Besonders bevorzugt können diese Komponenten in einem Zweikomponenten-Spritzgussverfahren hergestellt sein. Alternativ ist es auch denkbar, dass diese Komponenten unter Verwendung des Dichtelements 3 als Einlegeteil zur Einlage in eine Spritzgussform zur Herstellung des Dichtungsträgers 2 in einem Spritzgussverfahren vorgesehen sind.

Die Dichtmanschette 1, insbesondere der Dichtungsträger 2 oder dessen Trägerteile 20, können zu dem oder den Aufnahmeräumen 21 hin vorstehende Haltestrukturen 11 aufweisen, um in Einbaulage die jeweiligen Lichtbandelemente 101 wenigstens quer zur Längsachse L oder Trägerteillängsachse TL formschlüssig und/oder kraftschlüssig zu umgreifen bzw. allgemein die Dichtmanschette 1 mit den entsprechenden Lichtbandelementen 101 formschlüssig und/oder kraftschlüssig zu verbinden. Diese Verbindung ist bspw. den Fig. 6 bis 8 zu entnehmen.

Die Dichtmanschette 1 weist in Richtung der Trägerteillängsachse TL gesehen bzw. in Einbaulage in Richtung der Längsachse L gesehen einen zusammenhängenden, über eine offene Seite 12 einseitig offenen Querschnitt auf. Dieser Querschnitt ist bevorzugt ein im wesentlichen U-förmiger Querschnitt, wie dem Ausführungsbeispiel zu entnehmen ist. Somit entspricht die Dichtmanschette 1 auf ihrer Dichtseite im Wesentlichen der hier dargestellten, ebenfalls im Grunde U-förmigen Außenkontur eines Lichtbandelements 101, mit der die Dichtmanschette 1 in Einbaulage zur stirnseitig dichtender Anlage mit dem Dichtsteg 30 vorsteht.

Die offene Seite 12 ist bevorzugt von distalen Endabschnitten 25 des Dichtungsträgers 2 begrenzt, wobei sich die Haltestrukturen 11 bevorzugt von den Endabschnitten 25 weg erstrecken, wie Fig. 1 bis 3 zu entnehmen ist.

Wie insbesondere Fig. 1, 2 und 4 zu entnehmen ist, verlaufen die Trägerteillängsachsen TL bevorzugt parallel zueinander. Es ist jedoch auch denkbar, dass die Trägerteillängsachsen TL quer zueinander verlaufen und sich bevorzugt schneiden, besonders bevorzugt in einem Punkt schneiden. Eine parallele Ausrichtung der Trägerteillängsachsen TL ist dann gewünscht, wenn ein sich insgesamt in einer gradlinigen Längsrichtung erstreckendes Lichtbandsystem 100 bereitgestellt werden soll, sodass sich aus den Trägerteilen 20 die entsprechenden Lichtbandelemente 101 gradlinig heraus erstrecken können. Ein Verlauf der Trägerteillängsachsen TL relativ zueinander quer ist dann vorteilhaft, wenn sich die Lichtbandelemente 101 des Lichtbandsystems 100 bspw. abgewinkelt zueinander erstrecken sollen. So können auch in einem derartigen Ausführungsbeispiel die sich in der Regel gradlinig erstreckenden Lichtbandelemente 101 verwendet werden und dann entsprechend abgewickelt zueinander verlaufen.

Bevorzugt weist der Dichtungsträger 2 je nach Anzahl abzudichtender, aneinander angrenzender Lichtbandelemente 101 eine entsprechende Anzahl von Trägerteilen 20 auf. So weist der Dichtungsträger 2 bevorzugt wenigstens zwei oder auch mehr Trägerteile 20 auf. Die Trägerteillängsachsen TL verlaufen bevorzugt in einer Ebene, wobei auch hiervon abweichende Ausführungsformen von der Erfindung umfasst sind.

Mit Blick auf Fig. 6 bis 9 ist die vorliegende Erfindung ferner auf ein Lichtbandsystem 100 gerichtet, welches mehrere Lichtbandelemente 101, wie Lichtbandtragschienen und Endkappen, sowie wenigstens eine Dichtmanschette 1 gemäß der vorliegenden Erfindung und wie in vorbeschriebenem Ausführungsbeispiel beispielhaft beschrieben aufweist. Dabei grenzen jeweils wenigstens zwei der Lichtbandelemente 101 stirnseitig in dem Stoßbereich S aneinander an und erstrecken sich jeweils von dem Stoßbereich S weg entlang der jeweiligen Längsachse L, um ein zusammenhängendes System 100 zu bilden. Je Stoßbereich S weist die zugeordnete Dichtmanschette 1 eine der Anzahl der in diesem Stoßbereich S aneinander angrenzenden Lichtbandelemente 101 entsprechende Anzahl an Aufnahmeräumen 21 der Trägerteile 20 des Dichtungsträgers 2 auf. Jeweils eine Längsstirnseite 102 der Lichtbandelemente 101 ragt derart in einen der Aufnahmeräume 21, sodass je Lichtbandelement 101 wenigstens einer der zugeordneten Querdichtstege 31, 32 in wenigstens teilweise umlaufender, dichtender Anlage an einer Stirnfläche bzw. Längsstirnseite 102 dieses Lichtbandelements 101 steht.

Wie besonders deutlich der Fig. 8 zu entnehmen ist, kann je Aufnahmeraum 21 wenigstens einer und bevorzugt alle Querdichtstege 31, 32 den jeweiligen Stoßbereich S allseitig umgeben, um so zur stirnseitig dichtenden Anlage mit der zugewandten Längsstirnseite 102 bereitzustehen bzw. in dieser zu stehen. Somit kann der Stoßbereich S durch die Dichtmanschette 1 allseits umgebend abgedichtet werden, sodass eine sichere Dichtung zur Erzielung einer gewünschten IP Schutzklasse (bspw. IP64 oder mehr) ermöglicht ist. Da die Querdichtstege 31, 32 in den jeweiligen Aufnahmeraum 21 vorragen, können diese ferner Montagespiel, Wärmeausdehnung und Fertigungstoleranzen aufnehmen und so dauerhaft eine sichere Dichtung aufrechterhalten.

Die Lichtbandelemente 101 können, wie Fig. 9 zu entnehmen ist, mit ihrer Stirnfläche bzw. Längsstirnseite 102 mit einem definierten Anpressdruck oder Mindestanpressdruck in Richtung der Längsachse L oder der jeweiligen Trägerteillängsachse TL gesehen an dem Dichtsteg 30 oder den jeweiligen Querdichtstegen 31, 32 dichtend anliegen. Dies ist in Fig. 9 derart visualisiert worden, indem der obere Querdichtsteg 31 hier nicht in durch die Längsstirnseite 102 komprimiertem Zustand im Schnitt dargestellt ist, um den Kompressionsgrad zu verdeutlichen. Tatsächlich würde die Längsstirnseite 102 den entsprechenden Querdichtsteg 31 längs des Lichtbandelements 101 auf den Dichtsteg 30 zu zusammenpressen, um so eine hohe Dichtwirkung zu erzielen.

In einer bevorzugten Ausgestaltungsform ist die Dichtmanschette 1 mit den jeweiligen Lichtbandelementen 101 mechanisch gekoppelt, vorzugsweise mittels Kraft- und/oder Formschluss, besonders bevorzugt, mittels der Haltestrukturen 11, wie dies deutlich den Fig. 6 bis 8 zu entnehmen ist.

Die aneinander angrenzenden Lichtbandelemente 101 sind bevorzugt mittels eines Verbinders 105 mechanisch miteinander gekoppelt, um die Lichtbandelemente 101 bevorzugt in Richtung der Längsachsen L gesehen sicher miteinander zu fixieren. Auf diese Weise kann auch eine mechanische Belastung auf die Dichtmanschette 1 verringert werden, welche dann von dem Verbinder 105 aufgenommen wird. Zudem kann so eine Aufrechterhaltung der stirnseitigen Dichtung besonders sicher und dauerhaft ermöglicht werden. Der Verbinder 105 überspannt besonders bevorzugt den Stoßbereich S auf einer von dem Dichtungsträger 2 bzw. der Außenseite 103 abgewandten Seite (also einer Innenseite) der jeweiligen Lichtbandelemente 101.

Wie bspw. in der Fig. 9 zu erkennen ist, kann ein bezüglich des Dichtungsträgers 2 distales Ende 33 des Dichtstegs 30 in Erstreckungsrichtung E gesehen an dem Verbinder 105 anliegen. Auf diese Weise kann der Dichtsteg 30 an diesem distalen Ende 33 abgestützt und so insgesamt stabilisiert werden, was die Dichtfunktion weiter verbessert.

Wie insbesondere der Fig. 9 deutlich zu entnehmen ist, kann sich zwischen Dichtungsträger 2 oder Trägerteil 20 bzw. hier der Dichtungswand 34 einerseits und dem jeweiligen Lichtbandelement 101 andererseits ein Spalt X erstrecken, welcher in Richtung der Längsachse L gesehen zu dem Dichtsteg 30 hin zuläuft. Dabei kann der Spalt X gleichmäßig oder, wie dargestellt, gestuft zulaufen. Dies kann bspw. über die zuvor beschriebene schräg verlaufende Dichtungswand 34 hier mit ihren zwei Bereichen 340, 341 ermöglicht werden. Der steil verlaufende erste Bereich 340 bildet dann eine wirkungsvolle Spritzschutzwand. Der flach verlaufende zweite Bereich 341 dient weiter als Spritzschutzwand und ermöglicht ferner ein sicheres Fernhalten von eindringendem Wasser und anderen Fremdkörpern.

Die Lichtbandelemente 101 können wenigstens ein oder mehrere längliche Lichtbandtragschienen aufweisen, wie diese beispielhaft in Fig. 6 bis 9 dargestellt sind. Diese Lichtbandtragschienen 101 weisen bevorzugt jeweils einen Innenraum I zur Aufnahme elektrischer und/oder elektronischer Komponenten des Lichtbandsystems 100 auf. Bevorzugt bilden die Lichtbandtragschienen 101 bzw. deren Innenräume I einen zusammenhängenden Innenraum Z zur Aufnahme der elektrischen und/oder elektronischen Komponenten des Lichtbandsystems 100.

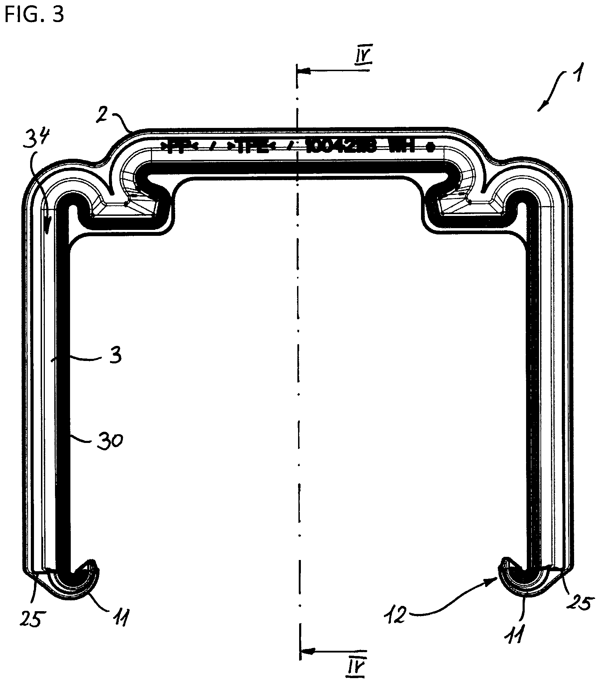

Die Lichtbandtragschienen 101 können in Richtung der Längsachse L gesehen einen zusammenhängenden, über eine offene Trägerseite 104 einseitig offenen Querschnitt aufweisen, vorzugsweise einen im Wesentlichen U-förmigen Querschnitt, wie dies aus der Zusammenschau der Fig. 6 und 8 ersichtlich ist. Auch sind andere Querschnittsformen, wie bspw. eine V-Form oder eine C-Form und andere denkbar. Die Kontur der Dichtmanschette 1 (vgl. bspw. Fig. 3) korrespondiert dabei bevorzugt mit der Außenkontur des entsprechenden Lichtbandelements 101, sodass eine gleichmäßige, umlaufende, dichtende Anlage sicher ermöglicht wird (vgl. bspw. Fig. 6).

Das Lichtbandsystem 100 weist ferner wenigstens eine oder mehrere elektrische und/oder elektronische Komponenten 106, wie ein in Fig. 6 bis 8 erkennbares Lichtband, auf. Diese Komponente(n) 106 ist/sind bevorzugt mit dem/den Lichtbandelement(en) 101 mechanisch gekoppelt. Ferner verschließt/verschließen diese Komponente(n) 106 vorzugsweise die offene Trägerseite 104; dies besonders bevorzugt dichtend. Die Komponente 106 kann sich dabei über den Stoßbereich S hinweg entlang zweier oder auch mehrerer Lichtbandelemente 101 erstrecken, wie dies ebenfalls in den Fig. 6 bis 8 zu erkennen ist. Die Komponente 106 begrenzt besonders bevorzugt zusammen mit der Dichtmanschette 1 sowie dem/den entsprechenden Lichtbandelement(en) 101 einen vollständig nach außen umschlossenen Systemraum.

Die vorliegende Erfindung ist auf das vorbeschriebene Ausführungsbeispiel nicht begrenzt, sofern sie vom Gegenstand der folgenden Ansprüche umfasst ist. Die Gegenstände und Merkmale des vorbeschriebenen Ausführungsbeispiels sind in beliebiger Weise miteinander kombinierbar und untereinander austauschbar.

## Patentansprüche

1. Dichtmanschette (1) zum Abdichten wenigstens zweier stirnseitig in einem Stoßbereich (S) aneinander angrenzender und sich jeweils von dem Stoßbereich (S) weg entlang einer jeweiligen Längsachse (L) erstreckender Lichtbandelemente (101), wie Lichtbandtragschienen und Endkappen, eines Lichtbandsystems (100),
wobei
die Dichtmanschette (1) aufweist:
• einen Dichtungsträger (2) und
• ein Dichtelement (3),
wobei der Dichtungsträger (2) je Lichtbandelement (101) einen Trägerteil (20) zur Aufnahme jeweiliger dem Stoßbereich (S) zugewandter Längsstirnseiten (102) der Lichtbandelemente (101) aufweist, und
wobei jeder Trägerteil (20) einen sich um eine Trägerteillängsachse (TL) erstreckenden Aufnahmeraum (21) zur Aufnahme der jeweiligen Längsstirnseite (102) wenigstens teilweise umlaufend umgibt,
**dadurch gekennzeichnet, dass**
das Dichtelement (3) einen Dichtsteg (30) aufweist, welcher von dem Dichtungsträger (2) derart in einer Erstreckungsrichtung (E) vorsteht, so dass der Dichtsteg (30) die Aufnahmeräume (21) trennt und in Einbaulage in den Stoßbereich (S) zur stirnseitig dichtenden Anlage an den Lichtbandelementen (101) ragt, und
sich von dem Dichtsteg (30) je Aufnahmeraum (21) wenigstens zwei in Erstreckungsrichtung (E) zueinander versetzt angeordnete und quer zur Erstreckungsrichtung (E) zum Aufnahmeraum (21) hin ragende Querdichtstege (31, 32) zur dichtenden Anlage an den Lichtbandelementen (101) erstrecken.

2. Dichtmanschette (1) nach Anspruch 1,
wobei die Querdichtstege (31, 32) sich umlaufend entlang wenigstens eines Teils oder des gesamten Dichtstegs (30) erstrecken, und/oder
wobei die zu demselben Aufnahmeraum (21) hin ragenden Querdichtstege (31, 32) sich umlaufend wenigstens teilweise entlang desselben Abschnitts des Dichtsteges (30) erstrecken, und/oder
wobei die zu demselben Aufnahmeraum (21) hin ragenden Querdichtstege (31, 32) konzentrisch angeordnet sind.

3. Dichtmanschette (1) nach einem der vorhergehenden Ansprüche, wobei die Querdichtstege (31, 32) als Dichtlippen ausgebildet sind, und/oder
wobei die zu demselben Aufnahmeraum (21) hin ragenden Querdichtstege (31, 32) sich gleich weit vom Dichtsteg (30) weg erstrecken, und/oder
wobei die zu demselben Aufnahmeraum (21) hin ragenden Querdichtstege (31, 32) sich parallel zu der jeweiligen Trägerteillängsachse (TL) erstrecken, und/oder
wobei wenigstens die zu demselben Aufnahmeraum (21) hin ragenden Querdichtstege (31, 32), vorzugsweise alle Querdichtstege (31, 32), sich parallel zueinander von dem Dichtsteg (30) weg erstrecken.

4. Dichtmanschette (1) nach einem der vorhergehenden Ansprüche, wobei sich das Dichtelement (3) von dem Dichtsteg (30) aus über wenigstens einen Teil der zu den jeweiligen Aufnahmeräumen (21) gerichteten Seite der Trägerteile (20) als Dichtungswand (34) erstreckt, dies vorzugsweise integral, und/oder
wobei das jeweilige Trägerteil (20) oder, wenn vorhanden, die jeweilige Dichtwand (34) sich entlang der Trägerteillängsachse (TL) mit zunehmendem Abstand vom Dichtsteg (30) weiter von der Trägerteillängsachse (TL) entfernt, dies vorzugsweise kontinuierlich oder diskontinuierlich.

5. Dichtmanschette (1) nach einem der vorhergehenden Ansprüche, wobei das Dichtelement (3) als ein- oder mehrteiliges Kunststoff-Spritzgussteil gebildet ist, und/oder
wobei das Dichtelement (3), vorzugsweise der Dichtsteg (30), auf den Dichtungsträger (2) aufgebracht, vorzugsweise aufgeklebt, aufgeschnappt, aufgeklemmt oder aufgeschäumt, ist.

6. Dichtmanschette (1) nach einem der vorhergehenden Ansprüche, wobei die Trägerteile (20) integral miteinander ausgebildet sind, und/oder
wobei der Dichtungsträger (2) als bevorzugt integrales Kunststoff-Spritzgussteil gebildet ist, und/oder
wobei der Dichtungsträger (2) aus PP, PC, PPA oder POM hergestellt ist.

7. Dichtmanschette (1) nach einem der vorhergehenden Ansprüche, wobei der Dichtungsträger (2) und das Dichtelement (3) integral miteinander verbunden oder ausgebildet sind, vorzugsweise in einem Spritzgussverfahren hergestellt sind, weiter bevorzugt in einem Zweikomponenten-Spritzgussverfahren oder unter Verwendung des Dichtelements (3) als Einlegeteil zur Einlage in eine Spritzgussform zur Herstellung des Dichtungsträgers (2) in einem Spritzgussverfahren.

8. Dichtmanschette (1) nach einem der vorhergehenden Ansprüche, wobei die Dichtmanschette (1), insbesondere der Dichtungsträger (2) oder dessen Trägerteile (20), zum Dichtraum (10) hin vorstehende Haltestrukturen (11) aufweist, um in Einbaulage die jeweiligen Lichtbandelemente (101) wenigstens quer zur Längsachse (L) oder Trägerteillängsachse (TL) formschlüssig und/oder kraftschlüssig zu umgreifen.

9. Dichtmanschette (1) nach einem der vorhergehenden Ansprüche, wobei die Dichtmanschette (1) in Einbaulage in Richtung der Längsachse (L) oder in Richtung der Trägerteillängsachse (TL) gesehen einen zusammenhängenden, über eine offene Seite (12) einseitig offenen Querschnitt aufweist, vorzugsweise einen im Wesentlichen U-förmigen Querschnitt,
wobei vorzugsweise die offene Seite (12) seitlich von distalen Endabschnitten (25) des Dichtungsträgers (2) begrenzt ist, wobei sich ferner bevorzugt von den Endabschnitten (25) weg die Haltestrukturen (11) erstrecken.

10. Dichtmanschette (1) nach einem der vorhergehenden Ansprüche, wobei die Erstreckungsrichtung (E) senkrecht zu wenigstens einer oder allen Trägerteillängsachsen (TL) ausgerichtet ist, und/oder
wobei die Trägerteillängsachsen (TL) parallel oder quer zueinander verlaufen, sich bevorzugt schneiden, und/oder
wobei der Dichtungsträger (2) wenigstens zwei oder mehr Trägerteile (20) aufweist, wobei
die Trägerteillängsachsen (TL) bevorzugt in einer Ebene verlaufen.

11. Lichtbandsystem (100), aufweisend mehrere Lichtbandelemente (101), wie Lichtbandtragschienen und Endkappen, sowie wenigstens eine Dichtmanschette (1) gemäß einem der vorhergehenden Ansprüche,
wobei jeweils wenigstens zwei der Lichtbandelemente (101) stirnseitig in einem Stoßbereich (S) aneinander angrenzen und sich jeweils von dem Stoßbereich (S) weg entlang einer jeweiligen Längsachse (L) erstrecken, um ein zusammenhängendes System zu bilden, wobei je Stoßbereich (S) die zugeordnete Dichtmanschette (1) eine der Anzahl der in diesem Stoßbereich (S) aneinander angrenzenden Lichtbandelemente (101) entsprechende Anzahl an Aufnahmeräumen (21) aufweist,
wobei jeweils eine Längsstirnseite (102) der Lichtbandelemente (101) derart in einen der Aufnahmeräume (21) ragt, so dass je Lichtbandelement (101) wenigstens einer der zugeordneten Querdichtstege (31, 32) in wenigstens teilweise umlaufender, dichtender Anlage an einer Stirnfläche dieses Lichtbandelements (101) steht.

12. Lichtbandsystem (100) nach Anspruch 11, wobei die Lichtbandelemente (101) mit ihrer Längsstirnseite (102) mit einem definierten Anpressdruck oder Mindestanpressdruck in Richtung der Längsachse (L) oder der jeweiligen Trägerteillängsachse (TL) gesehen an dem Dichtsteg (30) oder den jeweiligen Querdichtstegen (31, 32) dichtend anliegen, und/oder
wobei die Dichtmanschette (1) mit den jeweiligen Lichtbandelementen (101) mechanisch gekoppelt ist, vorzugsweise mittels Kraft- und/oder Formschluss, besonders bevorzugt mittels der Haltestrukturen (11), und/oder
wobei die aneinander angrenzenden Lichtbandelemente (101) mittels eines Verbinders (105) mechanisch miteinander gekoppelt sind, wobei der Verbinder (105) bevorzugt den Stoßbereich (S) auf einer von dem Dichtungsträger (2) abgewandten Seite der jeweiligen Lichtbandelemente (101) überspannt.

13. Lichtbandsystem (100) nach einem der Ansprüche 11 bis 12, wobei sich zwischen Dichtungsträger (2) oder dem Trägerteil (20) oder der Dichtungswand (34) einerseits und dem jeweiligen Lichtbandelement (101) andererseits ein Spalt (X) erstreckt, welcher in Richtung der Längsachse (L) gesehen zu dem Dichtsteg (30) hin zuläuft.

14. Lichtbandsystem (100) nach einem der Ansprüche 11 bis 13, wobei die Lichtbandelemente (101) wenigstens eine oder mehrere längliche Lichtbandtragschienen aufweisen, welche einen bevorzugt zusammenhängenden Innenraum (Z) zur Aufnahme elektrischer und/oder elektronischer Komponenten bilden,
wobei vorzugsweise die Lichtbandtragschiene in Richtung der Längsachse (L) gesehen einen zusammenhängenden, über eine offene Trägerseite (104) einseitig offenen Querschnitt aufweist, ferner vorzugsweise einen im Wesentlichen U-förmigen Querschnitt.

15. Lichtbandsystem (100) nach einem der Ansprüche 11 bis 14, ferner aufweisend wenigstens eine elektrische und/oder elektronische Komponente, wie ein Lichtband, welches bevorzugt mit wenigstens einem der Lichtbandelemente (101) mechanisch gekoppelt ist und ferner vorzugsweise die offene Trägerseite (104) bevorzugt dichtend verschließt, um besonders bevorzugt mit der Dichtmanschette (1) sowie dem oder den Lichtbandelementen (101) zusammen einen vollständig nach außen umschlossenen Systemraum zu begrenzen.

## Claims

1. Sealing cuff (1) for sealing at least two light trunking elements (101), such as light trunking support rails and end caps, of a light trunking system (100), which light trunking elements adjoin one another on the end faces in a joint region (S) and each extend away from the joint region (S) along a relevant longitudinal axis (L), the sealing cuff (1) having:
• a seal support (2) and
• a sealing element (3),
the seal support (2) having a support part (20) for each light trunking element (101) for receiving respective longitudinal end faces (102) of the light trunking elements (101), the longitudinal end faces facing the joint region (S), and
each support part (20) at least partially encircling a receiving space (21) extending around a support part longitudinal axis (TL) for receiving the relevant longitudinal end face (102),
**characterized in that**
the sealing element (3) has a sealing web (30) which protrudes from the seal support (2) in an extension direction (E) such that the sealing web (30) separates the receiving spaces (21) and, in the installation position, projects into the joint region (S) for sealing contact with the light trunking elements (101) on the end faces, and at least two cross sealing webs (31, 32) extend from the sealing web (30) for each receiving space (21), which cross sealing webs are arranged offset from one another in the extension direction (E) and project transversely to the extension direction (E) towards the receiving space (21) for sealing contact with the light trunking elements (101).

2. Sealing cuff (1) according to claim 1, wherein the cross sealing webs (31, 32) extend circumferentially along at least part or all of the sealing web (30), and/or
wherein the cross sealing webs (31, 32) projecting towards the same receiving space (21) extend circumferentially at least partially along the same portion of the sealing web (30), and/or
wherein the cross sealing webs (31, 32) projecting towards the same receiving space (21) are arranged concentrically.

3. Sealing cuff (1) according to any of the preceding claims, wherein the cross sealing webs (31, 32) are formed as sealing lips, and/or
wherein the cross sealing webs (31, 32) projecting towards the same receiving space (21) extend the same distance away from the sealing web (30), and/or
wherein the cross sealing webs (31, 32) projecting towards the same receiving space (21) extend parallel with the relevant support part longitudinal axis (TL), and/or wherein at least the cross sealing webs (31, 32) projecting towards the same receiving space (21), preferably all cross sealing webs (31, 32), extend parallel with one another away from the sealing web (30).

4. Sealing cuff (1) according to any of the preceding claims, wherein the sealing element (3) extends from the sealing web (30) over at least part of the side of the support parts (20) directed towards the respective receiving spaces (21) as a sealing wall (34), preferably integrally, and/or
wherein the relevant support part (20) or, if present, the relevant sealing wall (34) moves further away from the support part longitudinal axis (TL), along the support part longitudinal axis (TL), with increasing distance from the sealing web (30), preferably continuously or discontinuously.

5. Sealing cuff (1) according to any of the preceding claims, wherein the sealing element (3) is formed as a one-part or multi-part plastics injection-molded part, and/or
wherein the sealing element (3), preferably the sealing web (30), is applied to the seal support (2), preferably glued, snapped, clamped or foamed onto the seal support.

6. Sealing cuff (1) according to any of the preceding claims, wherein the support parts (20) are formed integrally with one another, and/or
wherein the seal support (2) is formed as a preferably integral plastics injection-molded part, and/or
wherein the seal support (2) is made of PP, PC, PPA or POM.

7. Sealing cuff (1) according to any of the preceding claims, wherein the seal support (2) and the sealing element (3) are integrally connected to or formed with one another and are preferably made in an injection-molding process, more preferably in a two-component injection-molding process or by using the sealing element (3) as an insert for insertion into an injection mold for making the seal support (2) in an injection-molding process.

8. Sealing cuff (1) according to any of the preceding claims, wherein the sealing cuff (1), in particular the seal support (2) or its support parts (20), has holding structures (11) protruding towards the sealing space (10), in order to encompass the respective light trunking elements (101) form-fittingly and/or force-fittingly at least transversely to the longitudinal axis (L) or the support part longitudinal axis (TL) in the installation position.

9. Sealing cuff (1) according to any of the preceding claims, wherein in the installation position the sealing cuff (1), viewed in the direction of the longitudinal axis (L) or the support part longitudinal axis (TL), has a cohesive cross-section which is open on one side via an open side (12), preferably a substantially U-shaped cross-section,
wherein the open side (12) is preferably laterally delimited by distal end portions (25) of the seal support (2), wherein furthermore the holding structures (11) preferably extend away from the end portions (25).

10. Sealing cuff (1) according to any of the preceding claims, wherein the extension direction (E) is oriented perpendicular to at least one or all of the support part longitudinal axes (TL), and/or
wherein the support part longitudinal axes (TL) run parallel with or transversely to one another, preferably intersect, and/or
wherein the seal support (2) has at least two or more support parts (20), wherein the support part longitudinal axes (TL) preferably run in one plane.

11. Light trunking system (100) which has a plurality of light trunking elements (101), such as light trunking support rails and end caps, and at least one sealing cuff (1) according to any of the preceding claims,
wherein in each case at least two of the light trunking elements (101) adjoin one another on the end faces in a joint region (S) and in each case extend away from the joint region (S) along a relevant longitudinal axis (L) in order to form a cohesive system, wherein for each joint region (S) the associated sealing cuff (1) has a number of receiving spaces (21) corresponding to the number of light trunking elements (101) adjoining one another in this joint region (S),
wherein in each case a longitudinal end face (102) of the light trunking elements (101) projects into one of the receiving spaces (21) in such a way that for each light trunking element (101), at least one of the associated cross sealing webs (31, 32) is in at least partially circumferential, sealing contact with an end face of this light trunking element (101).

12. Light trunking system (100) according to claim 11, wherein the light trunking elements (101), with the longitudinal end face (102) thereof, viewed in the direction of the longitudinal axis (L) or the relevant support part longitudinal axis (TL), sealingly abut the sealing web (30) or the relevant cross sealing webs (31, 32), at a defined contact pressure or minimum contact pressure, and/or
wherein the sealing cuff (1) is mechanically coupled to the respective light trunking elements (101), preferably by means of a force-fitting or a form-fitting connection, particularly preferably by means of the holding structures (11), and/or
wherein the light trunking elements (101) adjoining one another are mechanically coupled to one another by means of a connector (105), wherein the connector (105) preferably spans the joint region (S) on a side of the respective light trunking elements (101) facing away from the seal support (2).

13. Light trunking system (100) according to any of claims 11 to 12, wherein a gap (X) extends between the seal support (2) or the support part (20) or the sealing wall (34) on one side and the relevant light trunking element (101) on the other side, which gap, viewed in the direction of the longitudinal axis (L), runs towards the sealing web (30).

14. Light trunking system (100) according to any of claims 11 to 13, wherein the light trunking elements (101) have at least one or a plurality of elongate light trunking support rails which form a preferably cohesive interior space (Z) for receiving electrical and/or electronic components,
wherein the light trunking support rail, viewed in the direction of the longitudinal axis (L), preferably has a cohesive cross-section which is open on one side via an open support side (104), more preferably a substantially U-shaped cross section.

15. Light trunking system (100) according to any of claims 11 to 14, further having at least one electrical and/or electronic component, such as a light trunking, which light trunking is preferably mechanically coupled to at least one of the light band elements (101) and furthermore preferably closes, preferably sealably, the open support side (104) in order to particularly preferably delimit, together with the sealing cuff (1) and the light band element or elements (101), a system space that is completely enclosed to the outside.

## Revendications

1. Manchette d'étanchéité (1) destinée à fermer hermétiquement au moins deux éléments (101) de bandeau lumineux, tels que des rails support de bandeau lumineux et des capuchons d'extrémité, d'un système (100) de bandeau lumineux, adjacents l'un à l'autre côté frontal dans une zone de jonction (S) et s'éloignant respectivement de la zone de jonction (S) le long d'un axe longitudinal (L) respectif, la manchette d'étanchéité (1) présentant :
• un support de joint (2) et
• un élément d'étanchéité (3),
le support de joint (2) présentant, pour chaque élément (101) de bandeau lumineux, une partie support (20) destinée à recevoir des faces frontales longitudinales (102) respectives, tournées vers la zone de jonction (S), des éléments (101) de bandeau lumineux et
chaque partie support (20) entourant au moins partiellement, de manière périphérique, un espace de réception (21) s'étendant autour d'un axe longitudinal (TL) de partie support afin de recevoir la face frontale longitudinale (102) respective,
**caractérisée en ce que**
l'élément d'étanchéité (3) présente une nervure d'étanchéité (30) qui fait saillie du support de joint (2) dans une direction d'extension (E) de telle sorte que la nervure d'étanchéité (30) sépare les espaces de réception (21) et pénètre en position de montage dans la zone de jonction (S) pour un appui étanche côté frontal contre les éléments (101) de bandeau lumineux et au moins deux nervures d'étanchéité transversales (31, 32) décalées l'une par rapport à l'autre dans la direction d'extension (E) et faisant saillie transversalement par rapport à la direction d'extension (E) vers l'espace de réception (21) s'étendent depuis la nervure d'étanchéité (30) pour chaque espace de réception (21) en vue de l'appui étanche contre les éléments (101) de bandeau lumineux.

2. Manchette d'étanchéité (1) selon la revendication 1, les nervures d'étanchéité transversales (31, 32) s'étendant de manière périphérique le long d'au moins une partie ou de la totalité de la nervure d'étanchéité (30) et/ou
les nervures d'étanchéité transversales (31, 32) faisant saillie vers le même espace de réception (21) s'étendant de manière périphérique au moins partiellement le long de la même section de la nervure d'étanchéité (30) et/ou
les nervures d'étanchéité transversales (31, 32) faisant saillie vers le même espace de réception (21) étant disposées de manière concentrique.

3. Manchette d'étanchéité (1) selon l'une des revendications précédentes, les nervures d'étanchéité transversales (31, 32) étant réalisées sous forme de lèvres d'étanchéité et/ou
les nervures d'étanchéité transversales (31, 32) faisant saillie vers le même espace de réception (21) s'étendant à la même distance en s'éloignant de la nervure d'étanchéité (30) et/ou
les nervures d'étanchéité transversales (31, 32) faisant saillie vers le même espace de réception (21) s'étendant parallèlement à l'axe longitudinal (TL) de partie support respectif et/ou
au moins les nervures d'étanchéité transversales (31, 32) faisant saillie vers le même espace de réception (21), de préférence toutes les nervures d'étanchéité transversales (31, 32), s'étendant parallèlement les unes aux autres en s'éloignant de la nervure d'étanchéité (30).

4. Manchette d'étanchéité (1) selon l'une des revendications précédentes, l'élément d'étanchéité (3) s'étendant à partir de la nervure d'étanchéité (30) sur au moins une partie du côté des parties support (20) orientées vers les espaces de réception (21) respectifs en tant que paroi de joint (34), cela de préférence d'un seul tenant et/ou
la partie support (20) respective ou, si elle est présente, la paroi de joint (34) respective s'éloignant davantage de l'axe longitudinal (TL) de partie support le long de l'axe longitudinal (TL) de partie support au fur et à mesure que la distance par rapport à la nervure d'étanchéité (30) augmente, cela de préférence de manière continue ou discontinue.

5. Manchette d'étanchéité (1) selon l'une des revendications précédentes, l'élément d'étanchéité (3) étant formé comme pièce moulée par injection en matériau synthétique, en une ou plusieurs parties et/ou
l'élément d'étanchéité (3), de préférence la nervure d'étanchéité (30), étant appliqué(e) sur le support de joint (2), de préférence collé, encliqueté, serré ou expansé.

6. Manchette d'étanchéité (1) selon l'une des revendications précédentes, les parties support (20) étant formées d'un seul tenant les unes avec les autres et/ou
le support de joint (2) étant formé comme une pièce moulée par injection en matériau synthétique de préférence d'un seul tenant et/ou
le support de joint (2) étant fabriqué en PP, PC, PPA ou POM.

7. Manchette d'étanchéité (1) selon l'une des revendications précédentes, le support de joint (2) et l'élément d'étanchéité (3) étant reliés ou formés d'un seul tenant l'un avec l'autre, de préférence fabriqués dans un procédé de moulage par injection, plus préférablement dans un procédé de moulage par injection à deux composants ou à l'aide de l'élément d'étanchéité (3) comme pièce d'insertion destinée à être insérée dans un moule de moulage par d'injection afin de fabriquer le support de joint (2) dans un procédé de moulage par injection.

8. Manchette d'étanchéité (1) selon l'une des revendications précédentes, la manchette d'étanchéité (1), en particulier le support de joint (2) ou ses parties support (20), présentant des structures de maintien (11) faisant saillie vers l'espace d'étanchéité (10), afin d'entourer par complémentarité de forme et/ou par liaison à force en position de montage les éléments (101) de bandeau lumineux respectifs au moins transversalement par rapport à l'axe longitudinal (L) ou à l'axe longitudinal (TL) de partie support.

9. Manchette d'étanchéité (1) selon l'une des revendications précédentes, la manchette d'étanchéité (1), vue en position de montage dans la direction de l'axe longitudinal (L) ou dans la direction de l'axe longitudinal (TL) de partie support, présentant une section transversale continue ouverte d'un côté par un côté ouvert (12), de préférence une section transversale sensiblement en forme de U,
de préférence, le côté ouvert (12) étant délimité latéralement par des sections d'extrémité (25) distales du support de joint (2), en outre, de préférence, les structures de maintien (11) s'étendant à partir des sections d'extrémité (25).

10. Manchette d'étanchéité (1) selon l'une des revendications précédentes, la direction d'extension (E) étant orientée perpendiculairement à au moins l'un ou à tous les axes longitudinaux (TL) de partie support et/ou
les axes longitudinaux (TL) de partie support étant parallèles ou transversaux entre eux, se coupant de préférence et/ou
le support de joint (2) présentant au moins deux parties support (20) ou plus, les axes longitudinaux (TL) de partie support s'étendant de préférence dans un plan.

11. Système (100) de bandeau lumineux, présentant plusieurs éléments (101) de bandeau lumineux, tels que des rails support de bandeau lumineux et des capuchons d'extrémité, ainsi qu'au moins une manchette d'étanchéité (1) selon l'une des revendications précédentes,
respectivement au moins deux des éléments (101) de bandeau lumineux étant adjacents l'un à l'autre du côté frontal dans une zone de jonction (S) et s'éloignant respectivement de la zone de jonction (S) le long d'un axe longitudinal (L) respectif afin de former un système continu, pour chaque zone de jonction (S), la manchette d'étanchéité (1) associée présentant un nombre d'espaces de réception (21) correspondant au nombre d'éléments (101) de bandeau lumineux adjacents les uns aux autres dans cette zone de jonction (S),
une face frontale longitudinale (102) des éléments (101) de bandeau lumineux pénétrant respectivement dans l'un des espaces de réception (21) de telle sorte que, pour chaque élément (101) de bandeau lumineux, au moins l'une des nervures d'étanchéité transversales (31, 32) associées est en appui étanche au moins partiellement périphérique contre une face frontale de cet élément (101) de bandeau lumineux.

12. Système (100) de bandeau lumineux selon la revendication 11, les éléments (101) de bandeau lumineux s'appliquant de manière étanche avec leur face frontale longitudinale (102) contre la nervure d'étanchéité (30) ou les nervures d'étanchéité transversales (31, 32) respectives à une pression d'application définie ou une pression d'application minimale, vus dans la direction de l'axe longitudinal (L) ou de l'axe longitudinal (TL) de partie support respectif et/ou
la manchette d'étanchéité (1) étant accouplée mécaniquement aux éléments (101) de bandeau lumineux respectifs, de préférence au moyen d'une liaison à force et/ou par complémentarité de forme, de manière particulièrement préférée au moyen des structures de maintien (11) et/ou
les éléments (101) de bandeau lumineux adjacents les uns aux autres étant accouplés mécaniquement les uns aux autres au moyen d'un raccord (105), le raccord (105) enjambant de préférence la zone de jonction (S) sur un côté des éléments (101) de bandeau lumineux respectifs qui est opposé au support de joint (2).

13. Système (100) de bandeau lumineux selon l'une des revendications 11 à 12, une fente (X) s'étendant entre le support de joint (2) ou la partie support (20) ou la paroi d'étanchéité (34) d'une part et l'élément (101) de bandeau lumineux respectif d'autre part, laquelle fente, vue dans la direction de l'axe longitudinal (L), se rétrécissant vers la nervure d'étanchéité (30).

14. Système (100) de bandeau lumineux selon l'une des revendications 11 à 13, les éléments (101) de bandeau lumineux présentant au moins un ou plusieurs rails support de bandeau lumineux allongés, qui forment un espace intérieur (Z) de préférence continu, destiné à recevoir des composants électriques et/ou électroniques,
de préférence le rail support de bandeau lumineux présentant, vu dans la direction de l'axe longitudinal (L), une section transversale continue ouverte d'un côté sur un côté support (104) ouvert, en outre de préférence une section transversale essentiellement en forme de U.

15. Système (100) de bandeau lumineux selon l'une des revendications 11 à 14, présentant en outre au moins un composant électrique et/ou électronique, tel qu'une bandeau lumineux, qui est de préférence accouplé mécaniquement à au moins l'un des éléments (101) de bandeau lumineux et qui en outre ferme de préférence de manière étanche le côté support (104) ouvert, afin de délimiter de manière particulièrement préférée à l'aide la manchette d'étanchéité (1) ainsi que du ou des éléments (101) de bandeau lumineux ensemble un espace de système entièrement entouré vers l'extérieur.
